# EUROPEAN PATENT SPECIFICATION

(11) **EP 0 344 893 B1**
(45) Date of publication and mention of the grant of the patent: **28.07.1993**
(21) Application number: 89303395.1
(22) Date of filing: 06.04.1989
(51) Int. Cl.: B60P 1/18

(54) **Improvements relating to lifting devices**
Hubvorrichtung
Dispositif de levage

(30) Priority: 08.04.1988 GB 8808196
(43) Date of publication of application: 06.12.1989
(73) Proprietor: AVONRIDE LIMITED, Maesteg Mid Glamorgan CF34 OAQ (GB)
(72) Inventor: Whitelock, John Ernest, Wick Near Bridgend Mid-Glamorgan (GB)
(74) Representative: Lainé, Simon James

(56) References cited:
- GB-A- 1 153 213

## Description

This invention relates to lifting devices and is concerned with those incorporated in vehicles to raise and lower the body or chassis relative to the wheels in order to assist loading and unloading, for example.

Generally, such lifting devices are hydraulically or pneumatically operated and usually one is provided for each wheel, or pair of wheels. Thus, there will be at least one device on each side of the vehicle. However, they may have their pressurised fluid supply in common so that they all act in unison. For convenience, reference will mostly be made to only one device in this specification.

An example of such a device is described in GB-A-2044694. A first lever is attached to a chassis by a torsion bar and a second lever is pivoted to the first one and carries a wheel. The two levers are coupled by a hydraulic ram which when fully extended holds the chassis at normal travelling height and which when contracted allows the chassis to sink to near ground level. For safety, the ram is lockable against contraction and in one form a bar 17 is simply pivoted down to overlie the ram rod and abut the end of the cylinder from which it emerges. In another form, a transverse locking pin is inserted in registering holes in two overlapping bars, one rigid with the second lever and the other pivoted to the first lever.

In practice, the first alternative has been rejected. One basic problem is that, when travelling over a rough road or uneven ground, the locking bar can be jolted clear of the ram. Since that will usually contract slightly when freed of the bar, the latter will not be able to fall back fully and re-lock the ram. The second alternative is more certain but it requires fine control of the ram to bring the holes into registry, and then manual insertion of the locking pin. It also necessarily entails the device extending substantially beyond the radius of the wheel and of any mudguard to given clearance and accessibility to the pin. There is no automatic release or engagement and the operator has to go round fitting and checking each pin individually.

It is the aim of this invention to provide a more compact and more automatic device, and one where it is immediately apparent to the operator that the catch is fully engaged.

According to the present invention there is provided a lifting device comprising a first member for mounting on a vehicle body or chassis, a second member, on which a vehicle wheel can be mounted, pivoted to the first member, a fluid ram acting between said members, and a manually releasable element pivoted on one member for locking the members in one extreme position of relative pivotal movement, characterised in that said locking element comprises a catch engageable with a fixed part of the other member for said locking and in that there are interacting means which, as said members revert from other positions to said one extreme position, cause the catch to re-assume its locking condition.

Thus, the catch can lock the vehicle body or chassis in a raised position and be manually released. But while the body is lowered and raised again, the catch does not have to be touched, and as raising is completed it re-engages automatically.

The members may be of generally plate-like form, overlapping and parallel to the radial plane of the vehicle wheel. The fixed part is conveniently a laterally projecting stud and the catch may be a plate-like element, parallel to said members, with a hooked formation to engage over the stud. There will thus be no movement transverse to the plates, and so everything can be confined in a very narrow width, enabling the device as a whole to be more compact and largely hidden between a wheel and the body or chassis. However, the means associated with the catch can be arranged to provide a visual indication of whether it is engaged or disengaged.

Conveniently, the catch has an associated latch mechanism to hold the catch itself in a locking condition. This latch mechanism will be manually adjustable to a stable, disengaged position thereby releasing the catch from its locking condition. There the latch mechanism may provide the visual indication that the catch is or can be so released. Normally, the device is held in a fully raised position by the catch, the ram having been pressurised and extended to achieve this. With the catches on top, the operator can thus easily check that all the associated latch mechanisms are in their indicating positions before bleeding the rams and allowing the vehicle body to subside.

Conveniently, the catch and the latch mechanism cooperate so that, when the catch has been at least partially disengaged from its locking condition, the latch mechanism is adjusted to a second stable position from which it is tripped back to the catch holding condition by said interacting means on the return of said members to said one extreme position. Thus no further manual operation in the lowering-lifting cycle is required after the initial adjustment of the latch mechanism, which will be a raising motion which flags that it is clear.

In this second stable position, the latch mechanism may still provide a visual indication that the catch is not in the locking condition. For example, it may revert to a partially raised position.

Preferably, there will be spring means to promote snap action of the catch and the latch mechanism as different positions are reached.

For a better understanding of the invention, one embodiment will now be described, by way of example, with reference to the accompanying drawings, in which:
Figure 1 is a side view, partly in section, of part of a lifting device at two stages of its operation, and
Figure 2 is a similar view showing a third stage.

All pivot axes referred to below are generally horizontal and parallel to the axes of the wheels of the vehicle to which the device is fitted, and it will be understood that each wheel will be independently mounted by means of a single associated device.

The raising and lowering device has a base plate 1 which is in a vertical plane attached to the side of a vehicle chassis, such as that of a trailer. It is of irregular polygonal shape, with flanges 2 along some edges for strength. It is shrouded by a casing 3, which is mainly another, larger polygonal parallel plate, also with edge flanges 4. This is pivoted to the base plate 1 at 5 near the lower forward corner of the latter. The casing 3 has a wheel (not shown) mounted on it, to the rear of the pivot axis 5, but its level of course varies as the device is operated and the casing shifts relative to the base plate. The mutual movement between the plate 1 and the casing 3 is generated in the lifting direction by a hydraulic ram 6 whose rod connects to a pin 7 at the rear upper corner of the plate 1. It extends downwardly and rearwardly to connect to the casing 3, this not being shown.

At a point forwards and downwards of the pin 7, near another corner of the plate 1, there is a fixed stud 8 engageable by a catch 9. The latter is pivoted at 10 to the casing 3 and has a straight leading edge 11 which, at its upper end, steps twice rearwardly to form abutments 12 and 13. The rear edge of the catch is an arc 14 centred on the pivot axis 10, and at the lower end, between this arc 14 and the leading edge 11, there is a detent 15 for engagement with the stud 8. The catch 9 also carries a pin abutment 16 between the pivot axis 10 and the upper leading corner, where the first step commences, and an anchorage point 17, close to the centre of the curved edge 14.

A cover 18 is pivoted at 19 to the casing, near the front. Towards the rear and underneath it has an anchorage point 20 for one end of a tension spring 21 whose other end connects to the point 17 on the catch 9. Further forward, there is another anchorage point 22 and a tension spring 23 acts between this and the upper end of a latch 24 pivoted at 25 to the cover 18, rearwardly of the pivot point 19. This latch 24 is a simple square ended bar, the major part of whose length is below the pivot point 25. The latter is surrounded by a bush 26 which can co-operate with the abutments 12 and 13 in a manner to be described in more detail later: but its point of contact with those abutments is on a continuation of the line between pivot points 19 and 25.

The forward flange 4 of the casing 3 carries a screw 27 adjustable by its head 28 outside and lockable by a nut 29. The screw projects horizontally and rearwardly into the casing and has a tiltable stop 30 at its inner end for cooperation with the leading edge 11 of the catch 9. At its upper forward corner, the stop 30 has a rounded shoulder 31 on which the latch 24 bears at certain positions of the device.

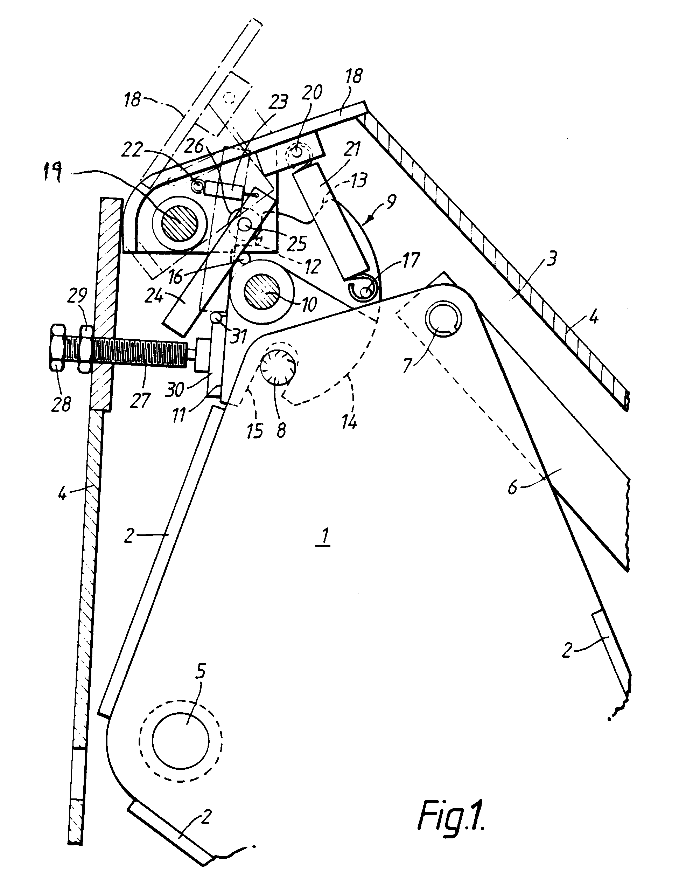

The operation will be described starting from the full line position of Figure 1 which shows the components in the "chassis raised" position. The ram 6 is fully extended, the detent 15 of the catch 9 is engaged around the stud 8, the leading edge 11 of the catch is abutting the stop 30 and the cover 18 is closed, being firmly held there primarily by the spring 21. however, the latch 24, held against anticlockwise rotation by the pin 16, is also acting through the spring 23 to help hold the cover down. The bush 26 is bearing against the leading, lower abutment 12 of the catch 9, and holding the latter against anti-clockwise movement.

To commence the lowering operation, the ram 6 is pressurised to take the weight off the pin 8 and the bush 26, and the cover 18 is then raised against the spring 21 to free the bush 26 from the abutment 12. The latch 24 slides over the pin 16 and swings relative to the casing 3 in the anticlockwise direction about its pivot point 25. Relative to the cover, it moves slightly clockwise. Eventually it becomes aligned with the leading edge 11 of the catch 9 and its lower end snaps over the shoulder 31. The cover 18 can then be released and it will remain propped open by the latch 24 as shown in broken lines in Figure 1. This also gives a clear visual check to the operator that each device is ready for lowering.

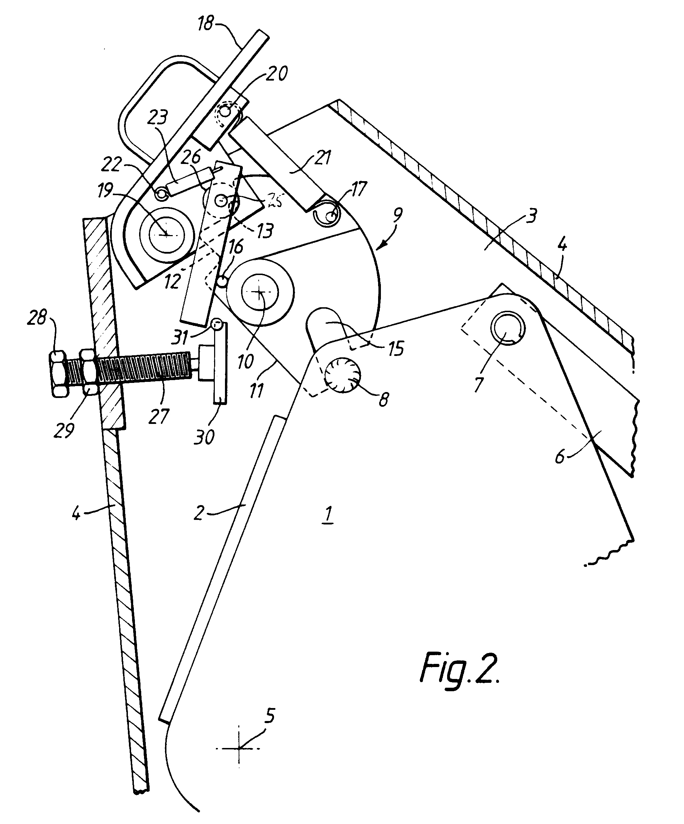

The operator then bleeds the ram 6 and the weight of the chassis will cause the casing 3 to pivot anticlockwise, contracting the ram. As it does so, the pivot point 10 of the catch 9 recedes from the stud 8 and so the latter approaches the mouth of the detent 15. During this movement, the pin 16 eases the latch 24 clear of the shoulder 31. The spring 21 therefore pulls the cover downwardly. But by now the bush 26 is over the second step in the catch 9 and the downward movement of the cover is restricted by the bush engaging the abutment 13 and the associated second step as shown in Figure 2. With further contraction of the ram, the stud 8 moves clear of the detent 15, until eventually the fully lowered position is reached. There is no further relative movement between the catch 9, cover 18, latch 24 and casing 3; they are effectively locked in the Figure 2 positions. But as the cover 18 is still visibly not closed, there is a visual signal that the plate 1 and casing 3 are not locked together.

When raising the chassis again, the ram is actuated to move the casing back towards the Figure 2 position, where the stud 8 engages the leading edge of the detent 15. As this movement continues, the catch 9 is urged clockwise, bringing the abutment 13 away from the bush 26. As the bush 26 moves along the step between the abutments 12 and 13, the pin 16 initially keeps the lower end of the latch 24 clear of the shoulder 31, but if contact is made towards the end, the stop 30 simply tilts. Eventually, the bush 26 reaches the end of that step and the spring 21 snaps the cover 18 shut, bringing the bush 26 into engagement with the abutment 12. At the same time, the leading edge 11 of the catch 9 engages the stop 30 and the latch 24 swings clear. Thus the full line Figure 1 position is resumed, and the casing 3 is locked relative to the baseplate 1. The full closure of the cover 18 gives the operator a visual check that the operation is complete and that it is safe to drive or tow the vehicle.

It will be observed from the geometry of the figures that the cover 18 could be pulled up without first pressurising the ram and locking it hydraulically. That would not necessarily be dangerous, but safety arrangements could be made to ensure that the cover was not so raisable unless there was hydraulic pressure in the ram. There might also be an additional cover catch so that it could not inadvertently be pulled or thrown up: for example, if while running hydraulic pressure was low, going over a bump might jerk the cover described up and start the lowering process. The extra catch might be arranged to require two-handed operation, for extra security.

It will be understood that there will generally be two or more such devices on any one vehicle. The rams will preferably be pressurised from a common supply, which may be through a single hand pump with facility for locking the system hydraulically and for releasing the pressure through a single control.

## Claims

1. A lifting device comprising a first member (1) for mounting on a vehicle body or chassis, a second member (3) on which a vehicle wheel can be mounted, pivoted to the first member (1), a fluid ram (6) acting between said members (1,3), and a manually releasable element (9) pivoted on one member (3) for locking the members in one extreme position of relative pivotal movement, characterised in that said locking element comprises a catch (9) engageable with a fixed part (8) of the other member for said locking and in that there are interacting means (12,13,15,21,26) which, as said members (1,3) revert from other positions to said one extreme position, cause the catch (9) to re-assume its locking condition.

2. A lifting device as claimed in Claim 1, characterised in that the members (1,3) are of generally plate-like form, overlapping and parallel to the radial plane of the associated vehicle wheel.

3. A lifting device as claimed in Claim 2, characterised in that said fixed part is a laterally projecting stud (8) and the catch (9) is a plate-like element, parallel to said members, with a hooked formation (15) to engage over the stud (8).

4. A lifting device as claimed in Claim 1, 2 or 3, characterised in that there are means (18) associated with the catch (9) arranged to provide a visual indication of whether the catch is engaged or disengaged.

5. A lifting device as claimed in any preceding Claim, characterised in that the catch (9) has an associated latch mechanism (18,24,25) to hold the catch (9) in its locking condition.

6. A lifting device as claimed in Claim 5, characterised in that the latch mechanism (18,24,26) is manually adjustable to a stable, disengaged position thereby releasing the catch (9) from its locking condition.

7. A lifting device as claimed in Claim 6 as appendant to Claim 4, characterised in that the latch mechanism (18,24,26) in said stable position provides the visual indication that the catch (9) is or can be released.

8. A lifting device as claimed in Claim 5, 6 or 7, characterised in that the catch (9) and the latch mechanism (18,24,25) co-operate so that, when the catch (9) has been at least partially disengaged from its locking condition, the latch mechanism (18,24,26) is adjusted to a second stable position from which it is tripped back to the catch holding condition by said interacting means (12,13,15,21,26) on the return of said members (1,3) to said one extreme position.

9. A lifting device as claimed in Claim 8 as appendant to Claim 4, characterised in that the latch mechanism (18,24,26) in said second stable position, provides the visual indication that the catch (9) is not in said locking condition.

10. A lifting device as claimed in any one of Claims 5 to 9, characterised in that spring means (21,23) promote snap action of the catch (9) and the latch mechanism (18,24,26) as different positions are reached.

## Patentansprüche

1. Eine Hubvorrichtung umfassend ein erstes Bauelement (1) zur Anbringung an eine Fahrzeugkarosserie oder an ein Fahrgestell, ein zweites Bauelement (3), an dem ein mit dem ersten Bauelement (1) schwenkbar verbundenes Fahrzeugrad angeordnet werden kann, einen zwischen den besagten Bauelementen (1,3) wirkenden Hydraulikzylinder (6) und ein mit einem Bauelement (3) schwenkbar verbundenes und von Hand auslösbares Organ (9) zum Sperren der Bauelemente in einer Endlage relativer Schwenkbewegung, dadurch gekennzeichnet, daß das besagte Sperrorgan eine Klaue (9) umfaßt, die sich zwecks der besagten Sperrung mit einem fest angebrachten Teil (8) des anderen Bauelements in Eingriff bringen läßt, sowie dadurch, daß aufeinander einwirkende Mittel (12,13,15,21,26) vorgesehen sind, die bewirken, daß Klaue (9) in den Sperrzustand zurückkehrt, wenn die besagten Bauelemente (1,3) von anderen Lagen in die besagte eine Endlage zurückgehen.

2. Eine Hubvorrichtung nach Anspruch 1, dadurch gekennzeichnet, daß die Bauelemente (1,3) eine im allgemeinen plattenartige Form haben, einander überlappen und parallel zu der Radialebene des betreffenden Fahrzeugrads sind.

3. Eine Hubvorrichtung nach Anspruch 2, dadurch gekennzeichnet, daß der besagte fest angebrachte Teil ein seitlich vorstehender Stift (8) und Klaue (9) ein plattenartiges Element ist, das zu den besagten Bauelementen parallel steht und zwecks Erfassung des Stiftes (8) hakenartige Form (15) aufweist.

4. Eine Hubvorrichtung nach Anspruch 1, 2 oder 3, dadurch gekennzeichnet, daß mit Klaue (9) in Verbindung stehende Mittel (18) vorgesehen sind, um visuell anzuzeigen, ob die Klaue in Eingriff ist oder nicht.

5. Eine Hubvorrichtung nach einem der vorstehenden Ansprüche, dadurch gekennzeichnet, daß Klaue (9) einen entsprechenden Feststellmechanismus (18,24,25) umfaßt, um Klaue (9) in ihrem gesperrten Zustand Zu erhalten.

6. Eine Hubvorrichtung nach Anspruch 5, dadurch gekennzeichnet, daß der Feststellmechanismus (18,24,26) von Hand auf eine stabile, ausgerückte Lage eingestellt werden kann, wodurch Klaue (9) aus ihrem Sperrzustand befreit wird.

7. Eine Hubvorrichtung nach Anspruch 6 als Zusatz zu Anspruch 4, dadurch gekennzeichnet, daß der Feststellmechanismus (18,24,26) in der besagten stabilen Lage die visuelle Anzeige liefert, daß Klaue (9) entsperrt ist oder entsperrt werden kann.

8. Eine Hubvorrichtung nach Anspruch 5, 6 oder 7, dadurch gekennzeichnet, daß Klaue (9) und Feststellmechanismus (18,24,25) so zusammenarbeiten, daß bei mindestens teilweisem Ausrücken der Klaue (9) aus ihrem Sperrzustand der Feststellmechanismus (18,14,26) auf eine zweite stabile Lage eingestellt wird, aus der er durch die besagten aufeinander einwirkenden Mittel (12,13,15,21,26) in den Klauenhaltezustand zurückgeschnappt wird, wenn die besagten Bauelemente (1,3) in die besagte eine Endlage zurückkehren.

9. Eine Hubvorrichtung nach Anspruch 8 als Zusatz zu Anspruch 4, dadurch gekennzeichnet, daß der Feststellmechanismus (18,14,26) in der besagten zweiten stabilen Lage die visuelle Anzeige liefert, daß Klaue (9) nicht in dem besagten Sperrzustand ist.

10. Eine Hubvorrichtung nach einem der Ansprüche 5 bis 9, dadurch gekennzeichnet, daß Federmittel (21,23) beim Erreichen verschiedener Lagen Einschnappen der Klaue (9) und des Feststellmechanismus (18,14,26) bewirken.

## Revendications

1. Un dispositif de levage comprenant un premier élément (1) se montant sur la carrosserie ou le châssis d'un véhicule, un deuxième élément (3) sur lequel peut être montée une roue de véhicule, et qui pivote par rapport au premier élément (1), un vérin hydraulique (6) agissant entre lesdits éléments (1, 3), et un élément libérable manuellement (9) qui pivote sur un élément (3) pour verrouiller les éléments dans une position extrême du pivotement relatif, caractérisé par le fait que ledit élément de verrouillage comprend un verrou (9) qui peut s'engager avec une partie fixe (8) de l'autre élément pour assurer ledit verrouillage, et qu'il y a des moyens d'interaction (12, 13, 15, 21, 26) qui, lorsque lesdits éléments (1, 3) reviennent d'autres positions à ladite position extrême, font reprendre au verrou (9) sa condition de verrouillage.

2. Un dispositif de levage selon Revendication 1, caractérisé par le fait que les éléments (1, 3) ont une forme générale de plaque, chevauchant le plan radial de la roue correspondante du véhicule et parallèle à celui-ci.

3. Un dispositif de levage selon Revendication 2, caractérisé par le fait que ladite partie fixe est une cheville qui dépasse latéralement (8) et le verrou (9) est un élément de type plaque parallèle auxdits éléments, comportant une formation en crochet (15) prévue pour s'engager sur la cheville (8).

4. Un dispositif de levage selon Revendication 1, 2 ou 3, caractérisé par le fait que des moyens (18) associés au verrou (9) sont prévus pour donner une indication visuelle de l'engagement ou du désengagement du verrou.

5. Un dispositif de levage selon l'une quelconque des revendications précédentes, caractérisé par le fait que le verrou (9) a un mécanisme de blocage connexe (18, 24, 25) pour maintenir le verrou (9) dans sa condition de verrouillage.

6. Un dispositif de levage selon Revendication 5, caractérisé par le fait que le mécanisme de blocage (18, 24, 26) est réglable manuellement à une position désengagée stable dégageant le verrou (9) de sa position de verrouillage.

7. Un dispositif de levage selon Revendication 6 en tant qu'annexe de la Revendication 4, caractérisé par le fait que le mécanisme de blocage (18, 24, 26) dans ladite position stable indique visuellement que le verrou (9) est ou peut être désengagé.

8. Un dispositif de levage selon Revendication 5, 6 ou 7, caractérisé par le fait que le verrou (9) et le mécanisme de blocage (18, 24, 25) coopèrent de telle sorte que, lorsque le verrou (9) a été au moins partiellement désengagé de sa condition de verrouillage, le mécanisme de blocage (18, 24, 26) est réglé à une deuxième position stable à partir de laquelle il est ramené automatiquement à la condition de maintien du verrou par lesdits moyens interactifs (12, 13, 15, 21, 26) lors du retour desdits éléments (1, 3) à ladite position extrême.

9. Un dispositif de levage selon Revendication 8, en tant qu'annexe à la Revendication 4, caractérisé par le fait que le mécanisme de blocage (18, 24, 26) dans ladite deuxième position stable indique visuellement que le verrou (9) n'est pas dans ladite condition de verrouillage.

10. Un dispositif de levage selon l'une quelconque des Revendications 5 à 9, caractérisé par le fait que des moyens de ressort (21, 23) favorisent l'enclenchement automatique du verrou (9) et du mécanisme de blocage (18, 24, 26) lorsque différentes positions sont atteintes.
